(19) Europäisches Patentamt
European Patent Office
Office européen des brevets

(11) EP 1 314 758 A1

(12) # DEMANDE DE BREVET EUROPEEN

(43) Date de publication:
**28.05.2003 Bulletin 2003/22**

(51) Int Cl.[7]: **C08L 77/00**, B32B 1/08, B32B 27/34, F16L 11/04, C08L 23/10

(21) Numéro de dépôt: **02292828.7**

(22) Date de dépôt: **14.11.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **22.11.2001 FR 0115115**
**14.02.2002 FR 0201840**

(71) Demandeur: **Atofina**
**92800 Puteaux (FR)**

(72) Inventeurs:
- **Merziger, Joachim**
**27000 Evreux (FR)**
- **Lacroix, Christophe**
**27700 Harquency (FR)**

(54) **Tube multicouche conducteur à base de polyamides et d'evoh pour le transport d'essence**

(57) La présente invention concerne un tube multicouche comprenant dans sa direction radiale de l'extérieur vers l'intérieur :

- une couche extérieure formée d'un polyamide choisi parmi le PA 11 et le PA 12,
- une couche formée d'un liant,
- une couche formée d'un EVOH,
- une couche formée d'un mélange de polyamide et de polyoléfine à matrice polyamide,
- une couche formée d'un liant,
- une couche intérieure formée d'un polyamide choisi parmi le PA 11 et le PA 12 et comportant une charge dispersée d'un électroconducteur produisant une résistivité surfacique inférieure à $10^6$ Ω,

les couches étant successives et adhérant entre-elles dans leur zone de contact respective.

Le tube de la présente invention est très peu perméable à l'essence particulièrement aux hydrocarbures et à leurs additifs, en particulier les alcools comme le méthanol et l'éthanol ou encore les éthers comme le MTBE ou l'ETBE. Ces tubes ont aussi une bonne tenue aux carburants et aux huiles de lubrification du moteur.

Ce tube présente de très bonnes propriétés mécaniques à basse ou à haute température.

EP 1 314 758 A1

## Description

[Domaine de l'invention]

La présente invention concerne des tubes conducteurs à base de polyamides et d'EVOH (copolymère éthylène- alcool vinylique) pour le transport d'essence et en particulier pour amener l'essence du réservoir d'une automobile jusqu'au moteur.

Pour des raisons de sécurité et de préservation de l'environnement les constructeurs d'automobiles imposent à ces tubes à la fois des caractéristiques mécaniques comme la résistance à l'éclatement et la flexibilité avec une bonne tenue aux chocs à froid (-40°C) ainsi qu'à température élevée (125°C), et également une très faible perméabilité aux hydrocarbures et à leurs additifs, en particulier les alcools comme le méthanol et l'éthanol. Ces tubes doivent aussi avoir une bonne tenue aux carburants et aux huiles de lubrification du moteur. Dans les véhicules automobiles, sous l'effet de la pompe à injection, l'essence circule à grande vitesse dans les canalisations reliant le moteur au réservoir. Dans certains cas, le frottement essence / paroi interne du tube peut générer des charges électrostatiques, dont l'accumulation peut conduire à une décharge électrique (étincelle) capable d'enflammer l'essence avec des conséquences catastrophiques (explosion). Aussi, est-il nécessaire de rendre conducteur la surface intérieure du tube en contact avec l'essence.

Ces tubes sont fabriqués par coextrusion des différentes couches selon les techniques habituelles des thermoplastiques.

[l'art antérieur et le problème technique]

Parmi les caractéristiques du cahier des charges de ces tubes, cinq sont particulièrement difficiles à obtenir conjointement de façon simple :

- tenue aux chocs à froid (-40°C), le tube ne se brise pas,
- tenue aux carburants
- tenue à température élevée (125°C),
- très faible perméabilité à l'essence,
- une bonne stabilité dimensionnelle du tube en utilisation avec de l'essence.

Dans les tubes multicouches de structures diverses, la tenue aux chocs à froid reste imprévisible avant d'avoir réalisé les tests normés de résistance aux chocs à froid.

Par ailleurs, il est déjà connu de la demande de brevet EP 0781799 que dans les véhicules automobiles, sous l'effet de la pompe à injection, l'essence circule à grande vitesse dans les canalisations reliant le moteur au réservoir. Dans certains cas, le frottement essence / paroi interne du tube peut générer des charges électrostatiques, dont l'accumulation peut conduire à une décharge électrique (étincelle) capable d'enflammer l'essence avec des conséquences catastrophiques (explosion). Aussi, est-il nécessaire de limiter la résistivité superficielle de la face interne du tube à une valeur en général inférieure à $10^6$ ohms. Il est connu d'abaisser la résistivité superficielle de résines ou matériaux polymériques en leur incorporant des matériaux conducteurs et/ou semiconducteurs tels que le noir de carbone, les fibres en acier, les fibres de carbone, les particules (fibres, plaquettes, sphères) métallisées avec de l'or, de l'argent ou du nickel.

Parmi ces matériaux, le noir de carbone est plus particulièrement employé, pour des raisons économiques et de facilité de mise en oeuvre. En dehors de ses propriétés électroconductrices particulières, le noir de carbone se comporte comme une charge telle que par exemple le talc, la craie, le kaolin. Ainsi, l'homme de l'art sait que lorsque le taux de charge augmente, la viscosité du mélange polymère / charge augmente. De même, lorsque le taux de charge augmente, le module de flexion du polymère chargé augmente. Ces phénomènes connus et prévisibles sont explicités dans "Handbook of Fillers and Reinforcements for Plastics" édité par H.S. Katz et J.V. Milewski - Van Nostrand Reinhold Company - ISBN 0-442-25372-9, voir en particulier le chapitre 2, section II pour les charges en général et le chapitre 16, Section VI pour le noir de carbone en particulier.

Quant aux propriétés électriques du noir de carbone, le bulletin technique "Ketjenblack EC - BLACK 94/01" de la société AKZO NOBEL indique que la résistivité de la formulation chute très brutalement lorsque un taux critique de noir de carbone, appelé seuil de percolation, est atteint. Lorsque le taux de noir de carbone augmente encore, la résistivité diminue rapidement jusqu'à atteindre un niveau stable (zone de plateau). On préfère donc, pour une résine donnée, opérer dans la zone de plateau, où une erreur de dosage n'aura qu'une faible influence sur la résistivité du compound.

On connait aussi de la demande de brevet EP 0 731 308 des tubes à base de polyamides et d'EVOH pour le transport d'essence. Ces tubes peuvent avoir une structure à 4 couches comprenant respectivement une couche extérieure de PA 12, une couche de liant qui est une polyoléfine greffée, une couche d'EVOH et une couche intérieure en contact avec l'essence comprenant un mélange de polyamide et de polyoléfine à matrice polyamide.

Le brevet EP 428833 décrit un tube à 3 couches comprenant respectivement une couche extérieure de PA 12, une couche de liant qui est une polyoléfine greffée et une couche intérieure d'EVOH en contact avec l'essence.

Les brevets EP 428834 et EP 477606 décrivent un tube à 5 couches comprenant respectivement une couche extérieure de PA 12, une couche de liant qui est une polyoléfine greffée, une couche de PA 6, une couche d'EVOH et une couche intérieure en PA 6 en contact avec l'essence.

Le brevet US 5038833 décrit un tube à 3 couches comprenant respectivement une couche extérieure de PA 12, une couche d'EVOH et une couche intérieure en PA 12 en contact avec l'essence.

Tous ces tubes ont de bonnes propriétés mais l'épaisseur des couches de liant n'est pas facile à controler et il peut en resulter des délaminations. Dans le tube décrit dans US 5038833 il n'y a pas de liant mais il se produit des délaminations.

Le brevet EP 1036967 décrit un tube multicouche à base de polyamides, caractérisé par le fait qu'il comporte dans sa direction radiale de l'intérieur vers l'extérieur :

- une couche intérieure formée d'un polyamide ou d'un mélange de polyamide et de polyoléfine à matrice polyamide, cette couche comportant une charge dispersée de noir de carbone électroconducteur produisant une résistivité surfacique inférieure à $10^6$ Q,
- une couche intermédiaire formée d'un polyamide ou d'un mélange de polyamide et de polyoléfine à matrice polyamide, cette couche ne comportant pas de noir de carbone électroconducteur ou de quantité électriquement significative de ce noir de carbone,
- une couche d'EVOH,
- une couche de liant,
- une couche extérieure de polyamide,

les couches ci-dessus adhérant entre elles dans leur zone de contact respective. Ce tube a de très bonnes propriétés mécaniques et d'étanchéité à l'essence mais on a découvert que si la couche intérieure conductrice est à base de PA 11 ou de PA 12 et si la couche intermédiaire est à base d'un mélange de polyamide et de polyoléfine à matrice polyamide alors c'est un très bon compromis entre la conductivité et les propriétés barrière du tube. Cependant l'adhérence entre cette couche intérieure conductrice et la couche intermédiaire n'est pas parfaite. Cette adhérence imparfaite n'affecte pas la résistance au choc à froid qui reste le critère mécanique le plus important cependant au cas ou le tube se trouve en dépression alors la couche intérieure se décolle partiellement et risque de boucher le tube. Il est donc nécessaire de mettre un liant de coextrusion entre ces deux couches.

[Brève description de l'invention]

La présente invention concerne un tube multicouche comprenant dans sa direction radiale de l'extérieur vers l'intérieur :

- une couche extérieure formée d'un polyamide choisi parmi le PA 11 et le PA 12,
- une couche formée d'un liant,
- une couche formée d'un EVOH,
- une couche formée d'un mélange de polyamide et de polyoléfine à matrice polyamide,
- une couche formée d'un liant,
- une couche intérieure formée d'un polyamide choisi parmi le PA 11 et le PA 12 et comportant une charge dispersée d'un électroconducteur produisant une résistivité surfacique inférieure à $10^6$ Ω,

les couches étant successives et adhérant entre-elles dans leur zone de contact respective.

Avantageusement, le tube selon l'invention a un diamètre extérieur allant de 6 à 12 mm, une épaisseur totale de 0,38 mm à 2 mm,

une épaisseur de 300 à 800 μm pour la couche extérieure en polyamide 11 ou 12,

une épaisseur de 10 à 100 μm pour les couches de liant,

une épaisseur de 10 à 200 μm pour la couche en EVOH,

une épaisseur de 25 à 500 μm pour la couche formée d'un mélange de polyamide et de polyoléfine à matrice polyamide,

une épaisseur de 25 à 300 μm pour la couche de polyamide intérieure chargée d'un électroconducteur,

Le tube de la présente invention est très peu perméable à l'essence particulièrement aux hydrocarbures et à leurs additifs, en particulier les alcools comme le méthanol et l'éthanol ou encore les éthers comme le MTBE ou l'ETBE. Ces tubes ont aussi une bonne tenue aux carburants et aux huiles de lubrification du moteur.

Ce tube présente de très bonnes propriétés mécaniques à basse ou à haute température.

[Description détaillée de l'invention]

**S'agissant de la couche extérieure** en PA 11 ou en PA 12 ces polyamides ont avantageusement une masse moléculaire moyenne en nombre Mn en général supérieure ou égale à 5000. Leur viscosité inhérente (mesurée à 20°C pour un échantillon de 0,5 g dans 100 g de méta-crésol) est en général supérieure à 0,7.

Avantageusement ce polyamide de la couche extérieure est plastifié par des plastifiants usuels tels que le n-butyl benzène sulfonamide (BBSA) et les copolymères comprenant des blocs polyamides et des blocs polyéthers.

Les copolymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.

3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

Les séquences polyamides à bouts de chaînes diamines proviennent, par exemple, de la condensation d'acides alpha-oméga aminocarboxyliques, de lactames ou de diacides carboxyliques et diamines en présence d'une diamine limiteur de chaîne.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

La masse molaire en nombre $\overline{M_n}$ des séquences polyamides est comprise entre 300 et 15 000 et de préférence entre 600 et 5 000. La masse $\overline{M_n}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité inherente entre 0,8 et 2,5 mesurée dans le métacrésol à 250° C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le rapport de la quantité de copolymère à blocs polyamide et blocs polyether sur la quantité de polyamide est, en poids, compris avantageusement entre 10 / 90 et 60 / 40. On peut citer par exemple le copolymère à blocs PA 6 et blocs PTMG et le copolymère à blocs PA 12 et blocs PTMG.

**S'agissant des couches de liant** on définit ainsi tout produit qui permet une bonne adhésion entre les couches concernées c'est à dire entre la couche extérieure en PA 11 ou PA 12 et la couche d'EVOH et entre la couche de mélange de polyamide et de polyoléfine à matrice polyamide et la couche intérieure en PA 11 ou PA 12. Le liant est choisi avantageusement parmi les polyoléfines fonctionnalisées et les copolyamides.

**A titre d'exemple de liant à base de polyoléfines fonctionnalisées** on peut citer :

le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique, ou des mélanges de ces polymères greffés et de ces polymères non greffés,

les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les époxydes insaturés ; ces copolymères pouvant être greffés par des anhydrides d'acides dicarboxyliques insaturés tels que l'anhydride maléique ou des époxydes insaturés tels que le méthacrylate de glycidyle.

**Quant aux liants du type copolyamides** utilisables dans la présente invention ils ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux de la couche extérieure et de la couche intérieure.

Les copolyamides proviennent, par exemple, de la condensation d'acides alpha-oméga aminocarboxyliques de lactames ou de diacides carboxyliques et diamines.

**Selon un premier type les copolyamides** résultent de la condensation d'au moins deux acides alpha

oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne pouvant être par exemple une monoamine ou une diamine ou un monoacide carboxylique ou un diacide carboxylique. Parmi les limiteurs de chaîne on peut citer notamment l'acide adipique, l'acide azélaïque, l'acide stéarique, la dodecanediamine. Les copolyamides de ce premier type peuvent comprendre aussi des motifs qui sont des restes de diamines et diacides carboxyliques.

A titre d'exemple d'acide dicarboxylique on peut citer l'acide adipique, l'acide nonanedioïque, l'acide sébacique et l'acide dodécanédioïque.

A titre d'exemple d'acide alpha oméga aminocarboxylique on peut citer l'acide aminocaproïque, l'acide aminoundécanoïque et l'acide aminododécanoïque.

A titre d'exemple de lactame on peut citer le caprolactame et le laurolactame (2-Azacyclotridécanone).

**Selon un deuxième type les copolyamides** résultent de la condensation d'au moins un acide alpha-oméga aminocarboxylique (ou un lactame), au moins une diamine et au moins un diacide carboxylique. L'acide alpha oméga aminocarboxylique, le lactame et le diacide carboxylique peuvent être choisis parmi ceux cités plus haut.

La diamine peut être une diamine aliphatique branchée, linéaire ou cyclique ou encore arylique.

A titre d'exemples on peut citer l'hexaméthylènediamine, la pipérazine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

A titre d'exemples de copolyamides on peut citer les suivants :

a) **6 / 12 / IPD.6**
dans laquelle :

6 désigne des motifs résultant de la condensation du caprolactame,
12 désigne des motifs résultant de la condensation du laurolactame (2-Azacyclotridécanone),
IPD.6 désigne des motifs résultant de la condensation de l'isophorone diamine et de l'acide adipique. Les proportions en poids sont respectivement 20 / 65 / 15.

La température de fusion est de 125°C à 135°C.

b) **6 / 6.6 / 12**
dans laquelle :

6 désigne des motifs résultant de la condensation du caprolactame,
6.6 désigne des motifs hexaméthylèneadipamide (l'hexaméthylènediamine condensée avec l'acide adipique).
12 désigne des motifs résultant de la condensation du laurolactame (2-Azacyclotridécanone),

Les proportions en poids sont respectivement 40 / 20 / 40.

La température de fusion est de 115°C à 127°C.

c) **pip.12/pip.9/11**
dans laquelle:

pip.12 désigne des motifs résultant de la condensation de la pipérazine et du diacide en C 12,
pip.9 désigne des motifs résultant de la condensation de la pipérazine et du diacide en C9,
11 désigne les motifs resultants de la condensation de l'acide aminoundecanoïque,

les proportions en poids sont respectivement 35 / 35 / 30.

Les procédés de fabrication des copolyamides sont connus de l'art antérieur et ces copolyamides peuvent être fabriqués par polycondensation, par exemple en autoclave.

**Selon un troisième type les copolyamides** sont un mélange d'un copolyamide 6/12 riche en 6 et d'un copolyamide 6/12 riche en 12. S'agissant du mélange de copolyamides 6/12 l'un comprenant en poids plus de 6 que de 12 et l'autre plus de 12 que de 6, le copolyamide 6/12 résulte de la condensation du caprolactame avec le lauryllactame. Il est clair que "6" désigne les motifs dérivés du caprolactame et "12" désigne les motifs dérivés du lauryllactame. On ne sortirait pas du cadre de l'invention si le caprolactame était remplacé en tout ou partie par l'acide aminocaproïque, de même pour le lauryllactame qui peut être remplacé par l'acide aminododecanoïque. Ces copolyamides peuvent comprendre d'autres motifs pourvu que les rapports des proportions de 6 et de 12 soient respectées.

Avantageusement le copolyamide riche en 6 comprend 60 à 90% en poids de 6 pour respectivement 40 à 10% de 12.

Avantageusement le copolyamide riche en 12 comprend 60 à 90% en poids de 12 pour respectivement 40 à 10% de 6.

Quant aux proportions du copolyamide riche en 6 et du copolyamide riche en 12 elles peuvent être, en poids, de 40/60 à 60/40 et de préférence 50/50.

Ces mélanges de copolyamides peuvent aussi comprendre jusqu'à 30 parties en poids d'autres (co)polyamides ou de polyoléfines greffées pour 100 parties des copolyamides riches en 6 et riches en 12.

Ces copolyamides ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux des couches adjacentes. Ces produits se fabriquent par les techniques habituelles des polyamides. Des procédés sont décrits dans les brevets US 4424864, US 4483975, US 4774139, US 5459230, US 5489667, US 5750232 et US 5254641.

Si la couche extérieure est en PA 11 on préfère que le liant entre cette couche de PA 11 et la couche d'EVOH soit à base de polyoléfines fonctionnalisées. Si la couche extérieure est en PA 12 on préfère que le liant entre cette couche de PA 12 et la couche d'EVOH soit à base de copolyamide. Il en est de même pour le liant entre la couche intérieure et la couche du mélange de polyamide et de polyoléfine à matrice polyamide, si la couche intérieure est en PA 11 le liant est de préférence à base de polyoléfines fonctionnalisées et si la couche intérieure est en PA 12 le liant est de préférence à base de copolyamide.

**S'agissant de la couche formée de copolymère EVOH**, elle peut être constituée d'EVOH ou de mélange à base d'EVOH. l'EVOH est aussi appelé copolymère éthylène-acétate de vinyle saponifié. Le copolymère éthylène-acétate de vinyle saponifié à employer selon la présente invention est un copolymère ayant une teneur en éthylène de 20 à 70 % en moles, de préférence de 25 à 70 % en moles, le degré de saponification de son composant acétate de vinyle n'étant pas inférieur à 95 % en moles. Avec une teneur en éthylène inférieure à 20 % en moles, les propriétés barrière dans des conditions de forte humidité ne sont pas aussi élevées qu'on le souhaiterait, tandis qu'une teneur en éthylène dépassant 70 % en moles conduit à des baisses des propriétés barrière. Lorsque le degré de saponification ou d'hydrolyse est inférieur à 95 % en moles, les propriétés barrière sont sacrifiées.

On entend par propriétés barrière l'impermeabilité aux gaz, aux liquides et en particulier à l'oxygene, à l'essence pour les automobiles.

Parmi ces copolymères saponifiés, ceux qui ont des indices de fluidité à chaud dans l'intervalle de 0,5 à 100 g/10 minutes sont particulièrement utiles. Avantageusement le MFI est choisi entre 5 et 30 (g / 10min à 230°C sous 2,16 kg), "MFI" abréviation de "Melt Flow Index" désigne l'indice de fluidité à l'état fondu.

Il est entendu que ce copolymère saponifié peut contenir de faibles proportions d'autres ingrédients comonomères, y compris des α-oléfines comme le propylène, l'isobutène, l'α-octène, l'α-dodécène, l'α-octadécène, etc..., des acides carboxyliques insaturés ou leurs sels, des esters alkyliques partiels, des esters alkyliques complets, des nitriles, des amides et des anhydrides desdits acides, et des acides sulfoniques insaturés ou leurs sels.

Quant aux mélanges à base d'EVOH ils sont tels que l'EVOH forme la matrice, c'est à dire qu'il représente au moins 40% en poids du mélange et de préférence au moins 50%. Les autres constituants du mélange sont choisis parmi les polyolefines, les polyamides et éventuellement des polymères fonctionnels.

**A titre de premier exemple de ces mélanges à base d'EVOH** on peut citer les compositions comprenant (en poids) :

- 55 à 99,5 parties de copolymère EVOH,
- 0,5 à 45 parties de polypropylène et de compatibilisant, leurs proportions étant telles que le rapport de la quantité de polypropylène sur la quantité de compatibilisant est compris entre 1 et 5.

Avantageusement le rapport du MFI de l'EVOH au MFI du polypropylène est plus grand que 5 et de préférence compris entre 5 et 25. Avantageusement le MFI du polypropylène est compris entre 0,5 et 3 (en g/10mm à 230°C sous 2,16 kg) . Selon une forme avantageuse le compatibilisant est un polyéthylène portant des greffons polyamide et il résulte de la réaction (i) d'un copolymère de l'éthylène et d'un monomère insaturé X greffé ou copolymérisé avec (ii) un polyamide. Le copolymère de l'éthylène et d'un monomère insaturé X greffé ou est tel que X est copolymérisé et il peut être choisi parmi les copolymères éthylène-anhydride maléique et les copolymères éthylène - (méth)acrylate d'alkyle - anhydride maléique, ces copolymères comprenant de 0,2 à 10 % en poids d'anhydride maléique et de 0 à 40 % en poids de (méth)acrylate d'alkyle. Selon une autre forme avantageuse le compatibilisant est un polypropylène portant des greffons polyamide qui résulte de la réaction (i) d'un homopolymere ou d'un copolymère du propylène comprenant un monomère insaturé X, greffé ou copolymérisé, avec (ii) un polyamide. Avantageusement X est greffé. Le monomère X est avantageusement un anhydride d'acide carboxylique insaturé tel que par exemple l'anhydride maleique.

**A titre de deuxième exemple de ces mélanges à base d'EVOH** on peut citer les compositions comprenant :

- 50 à 98 % en poids d'un copolymère EVOH
- 1 à 50 % en poids d'un polyéthylène
- 1 à 15 % en poids d'un compatibilisant constitué d'un mélange d'un polyéthylène LLDPE ou métallocène et d'un polymère choisi parmi les élastomères, les polyéthylènes de très basse densité et les polyéthylènes métallocènes, le mélange étant cogreffé par un acide carboxylique insaturé ou un dérivé fonctionnel de cet acide.

Avantageusement le compatibilisant est tel que le rapport $MFI_{10}/MFI_2$ est compris entre 5 et 20, où $MFI_2$ est l'indice d'écoulement en masse fondue à 190°C sous une charge de 2,16 kg, mesuré suivant

ASTM D1238, $MFI_{10}$ est l'indice d'écoulement en masse fondue à 190°C sous une charge de 10 kg suivant ASTM D1238.

**A titre de troisième exemple de ces mélanges à base d'EVOH** on peut citer les compositions comprenant :

- 50 à 98 % en poids d'un copolymère EVOH
- 1 à 50 % en poids d'un copolymère éthylène - (méth)acrylate d'alkyle,
- 1 à 15 % en poids d'un compatibilisant résultant de la réaction (i) d'un copolymère de l'éthylène et d'un monomère insaturé X greffé ou copolymérisé avec (ii) un copolyamide.

Avantageusement le copolymère de l'éthylène et d'un monomère insaturé X greffé ou copolymérisé est tel que X est copolymèrisé et c'est un copolymère de l'éthylène et de l'anhydride maléique ou un copolymère de l'éthylène, d'un (méth)acrylate d'alkyle et de l'anhydride maléique. Avantageusement ces copolymères comprennent de 0,2 à 10 % en poids d'anhydride maléique et de 0 à 40 % en poids de (méth)acrylate d'alkyle.

**S'agissant de la couche formée d'un mélange de polyamide et de polyoléfine à matrice polyamide** on entend par polyamide les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique.

A titre d'exemple de polyamide on peut citer le PA 6 et le PA 6-6.

On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.

A titre d'exemple de lactames on peut citer ceux ayant de 3 à 12 atomes de carbone sur le cycle principal et pouvant être substitués. On peut citer par exemple le β,β-diméthylpropriolactame, le α,α-diméthylpropriolactame, l'amylolactame, le caprolactame, le capryllactame et le lauryllactame.

A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque $HOOC-(CH_2)_{10}-COOH$.

La diamine peut être une diamine aliphatique ayant de 6 à 12 atomes, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).

Avantageusement le copolyamide est choisi parmi le PA 6 / 12 et le PA 6 / 6-6. L'avantage de ces copolyamides est leur température de fusion inferieure à celle du PA 6.

On peut aussi utiliser tout polyamide amorphe sans point de fusion.

Le MFI des polyamides et des mélanges de polyamide et de polyoléfine de la présente invention est mesuré selon les règles de l'art à une température de 15 à 20°C au-dessus de la température de fusion du polyamide. S'agissant des mélanges à base de PA 6 le MFI est mesuré à 235°C sous 2,16 kg. S'agissant des mélanges à base de PA 6-6 le MFI est mesuré à 275°C sous 1 kg.

On peut utiliser des mélanges de polyamide. Avantageusement le MFI des polyamides est compris entre 1 et 50 g/10 min.

On ne sortirait pas du cadre de l'invention en remplaçant une partie du polyamide par un copolymère à blocs polyamide et blocs polyether, c'est à dire en utilisant un mélange comprenant au moins un des polyamides précédents et au moins un copolymère à blocs

polyamide et blocs polyether. Les copolymères à blocs polyamides et blocs polyéthers ont été décrits plus haut.

**Quant à la polyoléfine de ce mélange de polyamide et de polyoléfine** de la couche suivant celle d'EVOH elle peut être fonctionnalisée ou non fonctionnalisée ou être un mélange d'au moins une fonctionnalisée et/ou d'au moins une non fonctionnalisée. Pour simplifier le texte cette polyoléfine est designée par (B) et on a décrit ci dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :

- les homo polymères et copolymères du polyéthylène, en particulier LDPE, HDPE, LLDPE(linear low density polyéthylène, ou polyéthylène basse densité linéaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :

- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth) acrylate d'alkyle ;
- des copolymères éthylène et acétate de vinyle (EVA) et (méth)acrylate d'alkyle, contenant jusqu'à 40% en poids de comonomères .

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle. A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :

- les copolymères éthylène/(méth)acrylate d'alkyle / acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de

méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader®de la Demanderesse ou des polyoléfines greffées par de l'anhydride maléique comme les Orevac®de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

Le MFI du polyamide, les MFI de (B1) et (B2) peuvent être choisis dans une large plage il est cependant recommandé pour faciliter la dispersion de (B) que le MFI du polyamide soit plus grand que celui de (B).

Pour de faibles proportions de (B), par exemple 10 à 15 parties, il est suffisant d'utiliser une polyoléfine (B2) non fonctionnalisée. La proportion de (B2) et (B1) dans la phase (B) dépend de la quantité de fonctions présentes dans (B1) ainsi que de leur réactivité. Avantageusement on utilise des rapports en poids (B1) /(B2) allant de 5/35 à 15/25. On peut aussi pour de faibles proportions de (B) n'utiliser qu'un mélange de polyoléfines (B1) pour obtenir une réticulation.

**Selon une première forme préférée du mélange de polyamide et de polyoléfine** la polyoléfine (B) comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

**Selon une variante de cette première forme du mélange de polyamide et de polyoléfine** la polyoléfine (B) comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé et (iii) un polymère (C'2) choisi parmi les élastomères, les polyéthylènes de très basse densité et les copolymères de l'éthylène.

**Selon une deuxième forme préférée du mélange de polyamide et de polyoléfine** la polyoléfine (B) comprend (i) du polypropylène et (ii) une polyoléfine qui résulte de la réaction d'un polyamide (C4) avec un copolymère (C3) comprenant du propylène et un monomère insaturé X, greffé ou copolymérisé.

**Selon une troisième forme préférée du mélange de polyamide et de polyoléfine** la polyoléfine (B) comprend (i) un polyéthylène de type LLDPE, VLDPE ou metallocene et (ii) un copolymère éthylène -(meth)acrylate d'alkyle - anhydride maléique.

**Selon une quatrième forme préférée du mélange de polyamide et de polyoléfine** le polyamide est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40. Selon une première variante la polyoléfine (B) comprend (i) un polyéthylène de type LLDPE , VLDPE ou metallocène et (ii) un copolymère éthylène - (meth) acrylate d'alkyle -anhydride maléique; selon une deuxième variante la polyoléfine comprend deux polymères fonctionnalisés comprenant au moins 50 % en moles de motifs éthylène et pouvant réagir pour former une phase réticulée.

**S'agissant de la première forme** les proportions sont avantageusement les suivantes (en poids) :

60 à 70 % de polyamide,
5 à 15 % du mélange de (C1) et (C2) cogreffé
le complément en polyéthylène haute densité .

S'agissant du polyéthylène haute densité sa densité est

avantageusement comprise entre 0,940 et 0,965 et le MFI entre 0.1 et 5 g/10 min. ( 190°C 2,16 kg).

Le polyéthylène (C1) peut être choisi parmi les polyéthylènes cités plus haut. Avantageusement (C1) est un polyéthylène haute densité (HDPE) de densité comprise entre 0,940 à 0,965. Le MFI de (C1) est (sous 2,16 kg - 190°C) entre 0,1 et 3 g/10 min.

Le copolymère (C2) peut être par exemple un élastomère éthylène /propylène (EPR) ou éthylène / propylène / diène (EPDM). (C2) peut être aussi un polyéthylène de très basse densité (VLDPE) qui est soit un homopolymère de l'éthylène, soit un copolymère de l'éthylène et d'une alpha oléfine. (C2) peut aussi être un copolymère de l'éthylène avec au moins un produit choisi parmi (i) les acides carboxyliques insaturés, leurs sels, leurs esters, (ii) les esters vinyliques d'acides carboxyliques saturés (iii) les acides dicarboxyliques insaturés, leurs sels, leurs esters, leurs hemiesters, leurs anhydrides. Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

On utilise avantageusement l'anhydride maléique.

Divers procédés connus peuvent être utilisés pour greffer un monomère de greffage sur le mélange de (C1) et (C2). Par exemple, ceci peut être réalisé en chauffant les polymères (C1) et (C2) à température élevée, environ 150° à environ 300°C, en présence ou en l'absence d'un solvant avec ou sans générateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés. La quantité du monomère greffé est déterminée par dosage des fonctions succiniques par spectroscopie IRTF. Le MFI de (C1) et (C2) ayant été cogreffés est de 5 à 30 g/10 min. (190°C - 2,16 kg) de préférence 13 à 20.

Avantageusement le mélange de (C1) et (C2) cogreffés, est tel que le rapport $MFI_{10}$ / $MFI_2$ est supérieur à 18,5, $MFI_{10}$ désignant l'indice d'écoulement à 190°C sous une charge de 10 kg et $MFI_2$ l'indice sous une charge de 2,16 kg. Avantageusement le $MFI_{20}$ du mélange des polymères (C1) et (C2) cogreffés est inférieur à 24. $MFI_{20}$ désigne l'indice d'écoulement à 190°C sous une charge de 21,6 kg.

**S'agissant de la variante de la première forme** les proportions sont avantageusement les suivantes (en poids) :

60 à 70 % de polyamide,
5 à 10% de (C2) greffé,
5 à 10 % de (C'2)
le complément en polyéthylène haute densité .

(C2) est avantageusement un EPR ou un EPDM, (C'2) est avantageusement un EPR contenant en poids 70 à 75% d'éthylène.

**S'agissant de la deuxième forme** de l'invention les proportions sont avantageusement les suivantes (en poids) :

60 à 70 % de polyamide,
20 à 30 % de polypropylène
3 à 10 % d'une polyoléfine qui résulte de la réaction d'un polyamide (C4) avec un copolymère (C3) comprenant du propylène et un monomère insaturé X, greffé ou copolymérisé.

Le MFI du polypropylène est avantageusement inférieur à 0,5 g/10 min (230°C - 2,16 kg) et de préférence compris entre 0,1 et 0,5. De tels produits sont décrits dans EP 647681.

On décrit maintenant le produit greffé de cette deuxième forme de l'invention. On commence par préparer (C3) qui est soit un copolymère du propylène et d'un monomère insaturé X, soit un polypropylène sur lequel on greffe un monomère insaturé X. X est tout monomère insaturé pouvant être copolymérisé avec le propylène ou greffé sur le polypropylène et possédant une fonction pouvant réagir avec un polyamide. Cette fonction peut être par exemple un acide carboxylique, un anhydride d'acide dicarboxylique ou un epoxyde. A titre d'exemple de monomère X on peut citer l'acide (méth) acrylique, l'anhydride maléique et les epoxydes insaturés tels que le (méth)acrylate de glycidyle. On utilise avantageusement l'anhydride maléique. S'agissant des polypropylènes greffés on peut greffer X sur des polypropylènes homo ou copolymères, tels que des copolymères éthylène propylène majoritaires en propylène (en moles). Avantageusement (C3) est tel que X est greffé. Le greffage est une opération connue en soi.

(C4) est un polyamide ou un oligomère de polyamide. Des oligomères de polyamide sont décrits dans EP 342066 et FR 2291225. Les polyamides (ou oligomères) (C4) sont les produits de condensation des monomères déjà cités plus haut. On peut utiliser des mélanges de polyamides. On utilise avantageusement

le PA-6, le PA-11, le PA 12, le copolyamide à motifs 6 et motifs 12 (PA-6/12), et le copolyamide à base de caprolactame, hexaméthylènediamine et acide adipique (PA-6/6.6). Les polyamides ou oligomères (C4) peuvent être à terminaisons acides, amine ou monoamine. Pour que le polyamide ait une terminaison monoamine il suffit d'utiliser un limiteur de chaîne de formule

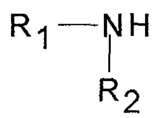

dans laquelle :

$R_1$ est l'hydrogène ou un groupement alkyle linéaire ou ramifié contenant jusqu'à 20 atomes de carbone,

$R_2$ est un groupement ayant jusqu'à 20 atomes de carbone alkyle ou alcenyle linéaire ou ramifié, un radical cycloaliphatique saturé ou non, un radical aromatique ou une combinaison des précédents. Le limiteur peut être par exemple la laurylamine ou l'oleylamine.

Avantageusement (C4) est un PA-6, un PA-11 ou un PA-12. La proportion de C4 dans C3 + C4 en poids est avantageusement comprise entre 0,1 et 60 %. La réaction de (C3) avec (C4) s'effectue de préférence à l'état fondu. On peut par exemple malaxer (C3) et (C4) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.

**S'agissant de la troisième forme** les proportions sont avantageusement les suivantes (en poids) :

60 à 70 % de polyamide,

5 à 15 % d'un copolymère éthylène -(meth)acrylate d'alkyle -anhydride maléique.

le complément est un polyéthylène de type LLDPE , VLDPE ou metallocene; avantageusement la densité de ce polyethylene est comprise entre 0,870 et 0,925, et le MFI est compris entre 0,1 et 5 (190°C - 2.16 kg).

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth) acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

**S'agissant de la quatrième forme** les proportions sont avantageusement les suivantes (en poids) :

**Selon une première variante:**

60 à 70 % du mélange de polyamide et de copolymère à blocs polyamide et blocs polyether,

5 à 15 % d'un copolymère éthylène -(meth)acrylate d'alkyle -anhydride maléique.

le complément est un polyéthylène de type LLDPE , VLDPE ou métallocène; avantageusement sa densité est comprise entre 0,870 et 0,925, et le MFI est compris entre 0,1 et 5 (190°C - 2.16 kg).

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth) acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

**Selon une deuxième variante:**

40 à 95 % du mélange de polyamide et de copolymère à blocs polyamide et blocs polyether,

60 à 5 % d'un mélange d'un copolymère éthylène -(meth)acrylate d'alkyle -anhydride maléique et d'un copolymère éthylène -(meth)acrylate d'alkyle - methacrylate de glycidyle.

Le copolymère à l'anhydride a été défini dans la première variante, Le copolymère éthylène/(méth) acrylate d'alkyle/ methacrylate de glycidyle peut contenir jusqu'à 40% en poids de (méth)acrylate d'alkyle, avantageusement de 5 à 40 % et jusqu'à 10% en poids d'époxyde insaturé, de préférence 0,1 à 8%. Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est de préférence de 20 à 35%. Le MFI est avantageusement compris entre 5 et 100 (en g/10 min à 190°C sous 2,16 kg), la température de fusion est comprise entre 60 et 110°C. Ce copolymère peut être obtenu par polymérisation radicalaire des monomères.

On peut ajouter des catalyseurs pour accélérer la réaction entre les fonctions epoxy et anhydride, parmi les composés capables d'accélérer la réaction entre la fonction epoxy et la fonction anhydride on peut citer notamment :

- des amines tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-I-imidazole, la tétraméthyléthylhydrazine, la N,N-diméthylpipérazine, la N,N,N',N'-tétraméthyl-I,6-hexanediamine, un mélange d'amines tertiaires ayant de 16 à 18 carbones et connues

sous l'appellation de diméthylsuifamine,

- des phosphines tertiaires telles que la triphénylphosphine
- des alkyldithiocarbamates de zinc.
- des acides.

Ces mélanges de polyamide et de polyoléfine peuvent être fabriqués par mélange des constituants à l'état fondu selon les techniques habituelles de matières thermoplastiques.

**S'agissant de la couche intérieure en PA 11 ou PA 12 en contact avec l'essence** il peut, comme celui de la couche extérieure, être plastifié par des plastifiants usuels tels que le n-butyl benzène sulfonamide (BBSA) et les copolymères comprenant des blocs polyamides et des blocs polyéthers.

Le polyamide contient un électroconducteur en quantité suffisante pour que la résistivité surfacique soit inférieure à $10^6$ Ω. On peut citer à titre d'exemple d'electroconducteur les métaux, les oxydes métalliques et les produits à base de carbone. A titre d'exemple de produits à base de carbone on peut citer le graphite, les agrégats de noir de carbone, les fibres de carbone, les nanotubes de carbone et les charbons actifs. On ne sortirait pas du cadre de l'invention en utilisant plusieurs éléments

S'agissant du noir de carbone la proportion est habituellement comprise entre 5 et 30 parties en poids de noir pour 100 parties de l'ensemble du polyamide et de ses plastifiants et autres additifs.

Ces tubes multicouches peuvent être cylindriques de diamètre constant ou annelés.

De manière classique, ces tubes peuvent comporter des gaines de protection notamment en caoutchouc pour les protéger des points chauds du moteur.

**Revendications**

1. Tube multicouche comprenant dans sa direction radiale de l'extérieur vers l'intérieur :

   - une couche extérieure formée d'un polyamide choisi parmi le PA 11 et le PA 12,
   - une couche formée d'un liant,
   - une couche formée d'un EVOH,
   - une couche formée d'un mélange de polyamide et de polyoléfine à matrice polyamide,
   - une couche formée d'un liant,
   - une couche intérieure formée d'un polyamide choisi parmi le PA 11 et le PA 12 et comportant une charge dispersée d'un électroconducteur produisant une résistivité surfacique inférieure à $10^6$ Q,

   les couches étant successives et adhérant entre-elles dans leur zone de contact respective.

2. Tube selon la revendication 1 dans lequel la couche intérieure en contact avec l'essence contient du noir de carbone en quantité suffisante pour que la résistivité surfacique soit inférieure à $10^6$ Ω.

3. Tube selon l'une quelconque des revendications précédentes dans lequel la couche extérieure est en PA 11 et le liant entre cette couche de PA 11 et la couche d'EVOH est à base de polyoléfines fonctionnalisées.

4. Tube selon l'une quelconque des revendications 1 à 2 dans lequel la couche extérieure est en PA 12 et le liant entre cette couche de PA 12 et la couche d'EVOH est à base de copolyamides.

5. Tube selon l'une quelconque des revendications précédentes dans lequel la couche intérieure est en PA 11 et le liant entre cette couche de PA 11 et la couche du mélange de polyamide et de polyoléfine à matrice polyamide est à base de polyoléfines fonctionnalisées.

6. Tube selon l'une quelconque des revendications 1 à 4 dans lequel la couche intérieure est en PA 12 et le liant entre cette couche de PA 12 et la couche du mélange de polyamide et de polyoléfine à matrice polyamide est à base de copolyamides.

7. Tube selon la revendication 4 ou 6 dans lequel les copolyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone.

8. Tube selon la revendication 4 ou 6 dans lequel les copolyamides résultent de la condensation d'au moins un acide alpha-oméga aminocarboxylique (ou un lactame), au moins une diamine et au moins un diacide carboxylique.

9. Tube selon la revendication 4 ou 6 dans lequel les copolyamides sont un mélange d'un copolyamide 6/12 riche en 6 et d'un copolyamide 6/12 riche en 12.

10. Tube selon la revendication 9 dans lequel le copolyamide riche en 6 comprend 60 à 90% en poids de 6 pour respectivement 40 à 10% de 12.

11. Tube selon la revendication 9 ou 10 dans lequel le copolyamide riche en 12 comprend 60 à 90% en poids de 12 pour respectivement 40 à 10% de 6.

12. Tube selon l'une quelconque des revendications 9 à 11 dans lequel les proportions du copolyamide riche en 6 et du copolyamide riche en 12 sont, en poids, de 40/60 à 60/40.

**13.** Tube selon l'une quelconque des revendications précédentes dans lequel la polyoléfine du mélange de polyamide et de polyoléfine à matrice polyamide comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

**14.** Tube selon l'une quelconque des revendications 1 à 12 dans lequel la polyoléfine du mélange de polyamide et de polyoléfine à matrice polyamide comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé et (iii) un polymère (C'2) choisi parmi les élastomères, les polyéthylènes de très basse densité et les copolymères de l'éthylène.

**15.** Tube selon l'une quelconque des revendications 1 à 12 dans lequel la polyoléfine du mélange de polyamide et de polyoléfine à matrice polyamide comprend (i) du polypropylène et (ii) une polyoléfine qui résulte de la réaction d'un polyamide (C4) avec un copolymère (C3) comprenant du propylène et un monomère insaturé X, greffé ou copolymérisé.

**16.** Tube selon l'une quelconque des revendications 1 à 12 dans lequel la polyoléfine du mélange de polyamide et de polyoléfine à matrice polyamide de la troisième couche comprend (i) un polyéthylène de type LLDPE , VLDPE ou metallocene et (ii) un copolymère éthylène -(meth)acrylate d'alkyle -anhydride maléique.

**17.** Tube selon l'une quelconque des revendication 1 à 12 dans lequel le polyamide du mélange de polyamide et de polyoléfine à matrice polyamide est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40.

**18.** Tube selon la revendication 17 dans lequel la polyoléfine du mélange de polyamide et de polyoléfine à matrice polyamide comprend (i) un polyéthylène de type LLDPE , VLDPE ou metallocene et (ii) un copolymère éthylène -(meth)acrylate d'alkyle -anhydride maléique.

**19.** Structure selon la revendication 17 dans lequel la polyoléfine du mélange de polyamide et de polyoléfine à matrice polyamide comprend deux polymères fonctionnalisés comprenant au moins 50 % en moles de motifs éthylène et pouvant réagir pour former une phase réticulée.

Office européen des brevets

# RAPPORT DE RECHERCHE EUROPEENNE

Numéro de la demande
EP 02 29 2828

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,Y | EP 1 036 967 A (ATOCHEM ELF SA) 20 septembre 2000 (2000-09-20) | 1-3, 13-16 | C08L77/00 B32B1/08 B32B27/34 F16L11/04 C08L23/10 |
| A | * colonne 9-10 * * colonne 2, alinéas 11-19 - colonne 5, alinéas 29-31,35; revendications 1,2; exemple 2 * --- | 19 | |
| D,Y | EP 0 731 308 A (ATOCHEM ELF SA) 11 septembre 1996 (1996-09-11) * page 2, ligne 28-45-54 - page 3, ligne 17-26-31-55; revendications 1,3,7; exemple * | 1 | |
| A | * page 4, ligne 18-37-38-46 * --- | 3,5, 13-16,19 | |
| D,Y | US 5 038 833 A (BRUNNNHOFER ERWIN) 13 août 1991 (1991-08-13) | 1 | |
| Y | * revendications 1,4,12; figure 2 * --- | 2,3, 13-16 | |
| A | EP 1 122 060 A (ATOFINA) 8 août 2001 (2001-08-08) | 1,3 | **DOMAINES TECHNIQUES RECHERCHES (Int.Cl.7)** |
| A | * revendications 1-3,9-16 * --- | 13,15-19 | C08L B32B C09J F16L |
| A | EP 1 156 080 A (ATOFINA ;P T SIDO BANGUN (ID)) 21 novembre 2001 (2001-11-21) * colonne 6-8; revendications 5-9 * ----- | 13-16 | |

Le présent rapport a été établi pour toutes les revendications

| Lieu de la recherche | Date d'achèvement de la recherche | Examinateur |
|---|---|---|
| LA HAYE | 18 mars 2003 | Ibarrola Torres, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

## ANNEXE AU RAPPORT DE RECHERCHE EUROPEENNE RELATIF A LA DEMANDE DE BREVET EUROPEEN NO.

EP 02 29 2828

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-03-2003

| Document brevet cité au rapport de recherche | Date de publication | Membre(s) de la famille de brevet(s) | Date de publication |
|---|---|---|---|
| EP 1036967 A | 20-09-2000 | FR 2791116 A1 | 22-09-2000 |
| | | AT 227817 T | 15-11-2002 |
| | | CA 2300634 A1 | 16-09-2000 |
| | | CN 1273171 A | 15-11-2000 |
| | | DE 60000752 D1 | 19-12-2002 |
| | | EP 1036967 A1 | 20-09-2000 |
| | | JP 2000310365 A | 07-11-2000 |
| | | NO 20001262 A | 18-09-2000 |
| | | US 6302153 B1 | 16-10-2001 |
| EP 0731308 A | 11-09-1996 | CA 2171414 A1 | 10-09-1996 |
| | | CN 1137974 A ,B | 18-12-1996 |
| | | DE 69602048 D1 | 20-05-1999 |
| | | DE 69602048 T2 | 11-11-1999 |
| | | EP 0731308 A1 | 11-09-1996 |
| | | ES 2130759 T3 | 01-07-1999 |
| | | JP 3167921 B2 | 21-05-2001 |
| | | JP 8247345 A | 27-09-1996 |
| | | KR 185010 B1 | 01-04-1999 |
| | | TW 426609 B | 21-03-2001 |
| | | US 6177162 B1 | 23-01-2001 |
| US 5038833 A | 13-08-1991 | DE 3510395 A1 | 25-09-1986 |
| | | FR 2579290 A1 | 26-09-1986 |
| | | IT 1191692 B | 23-03-1988 |
| | | JP 1958690 C | 10-08-1995 |
| | | JP 4055392 B | 03-09-1992 |
| | | JP 61248739 A | 06-11-1986 |
| EP 1122060 A | 08-08-2001 | EP 1122060 A1 | 08-08-2001 |
| | | AU 1832001 A | 23-08-2001 |
| | | CA 2334448 A1 | 07-08-2001 |
| | | CN 1315250 A | 03-10-2001 |
| | | EP 1122061 A1 | 08-08-2001 |
| | | JP 2001277441 A | 09-10-2001 |
| | | US 2002051891 A1 | 02-05-2002 |
| EP 1156080 A | 21-11-2001 | EP 1156080 A1 | 21-11-2001 |
| | | AU 8382401 A | 26-11-2001 |
| | | WO 0188037 A2 | 22-11-2001 |

EPO FORM P0460

Pour tout renseignement concernant cette annexe : voir Journal Officiel de l'Office européen des brevets, No.12/82